# EUROPEAN PATENT SPECIFICATION

(11) **EP 2 283 962 B1**
(45) Date of publication and mention of the grant of the patent: **03.07.2013**
(21) Application number: 09010512.3
(22) Date of filing: 14.08.2009
(51) Int. Cl.: B23K 26/14

(54) **Laser welding method with reduced helium consumption and laser welding head**
Laserschweißverfahren mit verringertem Heliumverbrauch und Laserschweisskopf
Soudage laser avec consommation réduite d'hélium et tête de soudage au laser

(43) Date of publication of application: 16.02.2011
(73) Proprietor: Linde AG, 80331 München (DE)
(72) Inventor: Rand, Christopher, Dr., Guildford, GU1 2JS (GB); Fieret, Jim, Dr., Shenington, OX15 6NE (GB); Viyyuri, Sreenivas, 85716 Unterschliessheim (DE)
(74) Representative: Kasseckert, Rainer

(56) References cited:
- EP-A2- 1 153 696
- WO-A1-2008/070930
- DE-A1- 3 923 829
- DE-A1-102004 040 501
- JP-A- 2 099 293

## Description

This invention relates to a method and a device for laser welding.

Laser welding can use substantial amounts of helium to shield the weld from atmospheric gases and to prevent plasma formation directly above the weld. In laser welding processes the gas can be used as a process gas. Typical flow per laser welding head is 20-40 standard liters/min. Reducing helium flow, aimed at cost savings, will affect weld quality by allowing air to get in contact with the molten metal and by not preventing the formation of an adverse plasma plume above the weld. Helium is a finite resource, extracted from natural gas sources, as it can not be commercially recovered from air due to its low boiling temperature.

A different way of reducing helium consumption for welding is to capture the helium at the welding point, and condition the gas in some way that it can be re-used for the welding process. The problem lies in the method of capturing the helium at the welding point using conventional suction nozzles, which are optimized for fume extraction, because these capture a lot of air also.

The conditioning of the captured gas can consist of a filter module to remove weld fumes, and a gas separator based on membrane technology to remove unwanted gas components from the helium, resulting in improved helium purity. However, membrane technology does not work well if the helium contains a large proportion of other gases, typically more than 20%.

Even if the captured helium contains only a small proportion of other gases, the purification process with membrane technology will not produce helium of high enough purity for some applications. It will therefore have to be mixed, using a special mixing device, with pure helium in such a proportion that adequate purity is reached for the process.

In the field of suction of hazardous welding fumes and based on the idea of C.P.N. Aaberg (US 3, 401 ,621) so called Aaberg nozzles have been developed for welding torches with a enhanced fume extraction.

WO 2008/070930 A1 discloses a method and a torch for welding, comprising a laser beam adapted to provide heat to a welding side, a fume gas extraction and at least one shroud gas port for a so called Aaberg gas flow according to the preambles of independent claims 1 and 4.

A device for recovering helium is disclosed in DE 10 2004 040 501 A1. Helium is separated from a flow, compressed and fed into a storage vessel from which it is supplied again to the point of use.

A technique for the membrane gas purifying is disclosed by example on the Generon website:
www.generon.com/products/prod-NMS-tech.html

The extracted gas is pressed through a device which consists of many thin membrane fibers, some of the gas molecules permeate through the membrane and the speed of this permeation depends on the species of the gas atom or molecule. The relative speed of permeation is depending from the type of the gas. H₂O and helium are very fast, nitrogen is very slow.

It is one aim of the invention to improve welding processes by reduction of the helium consumption and so reducing the costs of the process.

This problem is solved by a process according to claim 1, a torch according to claim 4 and by a device according to claim 8. Embodiments of the invention are subjects of the dependent claims.

The basic idea of the invention is the enhanced gas collection. Existing know-how includes special arc welding torches which have an extraction facility built in, based on the Aaberg principle. These torches are optimized for weld fume collection and disposal (see WO2008/070930A1).

Modeling efforts have shown that the Aaberg principle can be modified and adapted to laser welding not to optimize weld fume collection, but optimized for collection of as much helium as possible and collection of as little other gases as possible. This optimization process includes the use of a baffle in between the annular extraction nozzle and the Aaberg nozzle. The baffle may have any suited shape, especially made have the shape of a bell, of a horn, of a part of an ellipsoid, of a part of a paraboloid or similar. Preferred it has the shape of a cone.

The baffle has a conical shape with an aperture angle against the axis of the torch between 30 ° and 60°, preferably between 40 ° and 50 °, especially preferred 45 °.

The cone has a length of 0,5 - 4, preferred 1-2 of the diameter of the laser/shield gas nozzle exit.

In an embodiment the baffle and the outlet for the Aaberg gas are combined by incorporating the outlet in the tip of the baffle.

The Aaberg assist gas can be nitrogen, argon, or any other gas such as CO₂ ("Aaberg gas"). The extracted gas will therefore be a mixture of helium, air and Aaberg gas. The extracted gas will typically have the composition of at least 50 % helium, up to 20 % Aaberg gas and the remainder air. The inventive laser welding head is able to collect at least 50 % of all helium supplied to the welding process.

In particular, if the Aaberg gas is argon, it is possible to optimize the nozzle geometry such that the extracted gas contains less than 5 % air, the remainder being a mixture of helium and argon. In many laser welding applications, argon can be tolerated in the welding process gas, without adverse effects on the weld quality. Having only a small amount of air makes the conditioning of the captured gas more effective.

An improved embodiment of the invention uses an enhanced gas recycling. The recaptured gas will have to be filtered first, and then enter a purification system as outlined in the said DE 10 2004 040 501 A1. Alternatively to returning the purified helium back into a tank via a compressor, it is according to an embodiment of the invention proposed that the helium flow from the separator and the flow from the helium storage vessel are combined by means of a suitable adjustable valve, so that the purity of the gas directed to the welding head can be adjusted to a value that is no higher than minimally required by the process for producing laser welds of acceptable quality. This value can be substantially lower than the high purity helium in the container. For example, some laser welding applications can tolerate several percent nitrogen, which, if the Aaberg flow would be nitrogen, would be the only significant contamination. If lower nitrogen levels are required then argon or CO₂ can be used as Aaberg gas.

The attraction of working in this way is that a significant helium saving can be made without the need of very large purifiers and maybe a second stage at all is not necessary. Also there is no requirement for a second compressor. If the Aaberg nozzle assembly can be optimized to capture helium with only a small fraction of nitrogen, then the purifier could be very small and economical. Indeed if the captured helium contains even less nitrogen, then there may not be a need for a purifier at all, just a mixing valve combining the flow from compressor/extractor fan (via a smoke filter) and the flow from the tank.

Regarding the membrane filtering there should be said, that from an efficiency view point, nitrogen is most effectively removed by a membrane, but given the susceptibility of some metal to embrittlement in the presence of nitrogen during welding, the Aaberg gas can be replaced by for example argon. Since argon is an inert gas it does not affect weld quality. Aaberg flow can also consist of CO₂ or contain oxygen or be a mixture. These gases are chemically active during welding and can result in weld quality improvement.

The advantages of the invention are as follows:
A reduction in helium use of 50 % ore more.

The Aaberg gas flow and the baffle reduce the amount of air that is diffused and carried into the weld area, therefore resulting in better weld quality and reduced plasma formation.

The method and apparatus according to the invention will now be described by way of example with references to the accompanying drawings, where:
Figure 1 is a schematic sketch of a nozzle and a flow diagram according to the invention and,
Fig. 2 is a further embodiment.

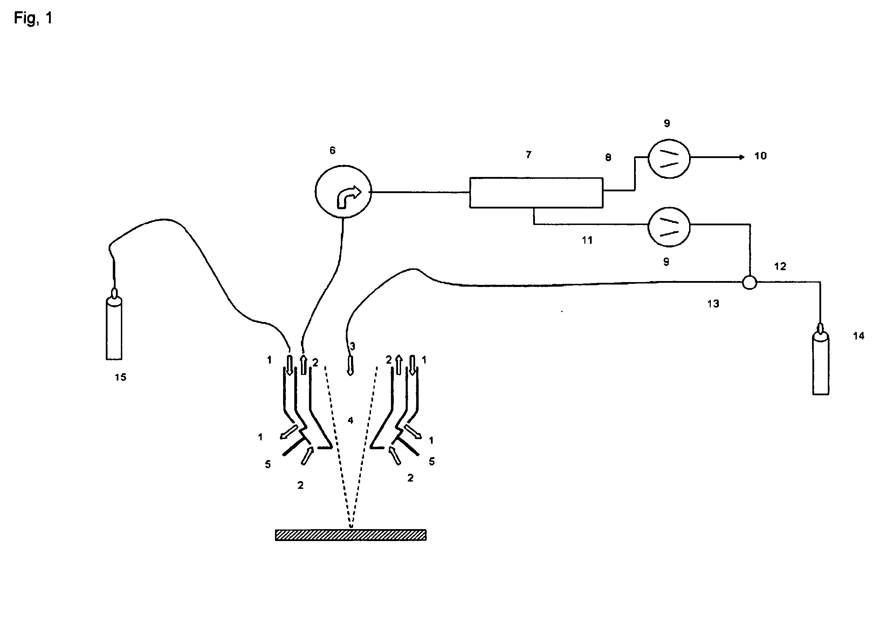

Fig. 1 shows on the left hand an sectual view of an annular laser welding torch and on the right hand a flowchart for the gases. In the centre or axis of the torch a focused laser beam 4 (indicated with dotted lines) is directed onto a work piece. A welding process gas flow 3 containing Helium is shielding the beam and the welding or heat affected zone. A first circumjacent channel or port is foreseen for sucking in the extracted or fume gas flow 2. A second circumjacent channel or port is foreseen for delivering an Aaberg gas flow (shroud gas) 1 by an annular nozzle. According to the invention an annular baffle 5 is foreseen which separates the gas flows 1 and 2. The baffle 5 improves the effect of the Aaberg flow 1 significantly and has here a conical shape and includes an aperture angle of 45° to the axis of the torch.

A blower or fan 6 can be used (optional) for sucking the gas and feeding it to a gas separator 7 - preferred a membrane separator. A filter for the retention of dust can be used but is not shown in the figure 1. From the separator 7 a helium depleted gas flow 8 is fed by a pump 9 (vacuum pump) through an exhaust 10 into the ambient air. According to the invention the helium enriched gas flow 11 is fed directly by a second pump 9 (vacuum pump) to a gas mixing device 12 - which can be realized by an adjustable valve - and is there mixed with the pure helium from the pure helium store vessel 14 into the flow line 13 to the laser welding Aaberg nozzle. The Aaberg gas is stored in the storage vessel 15.

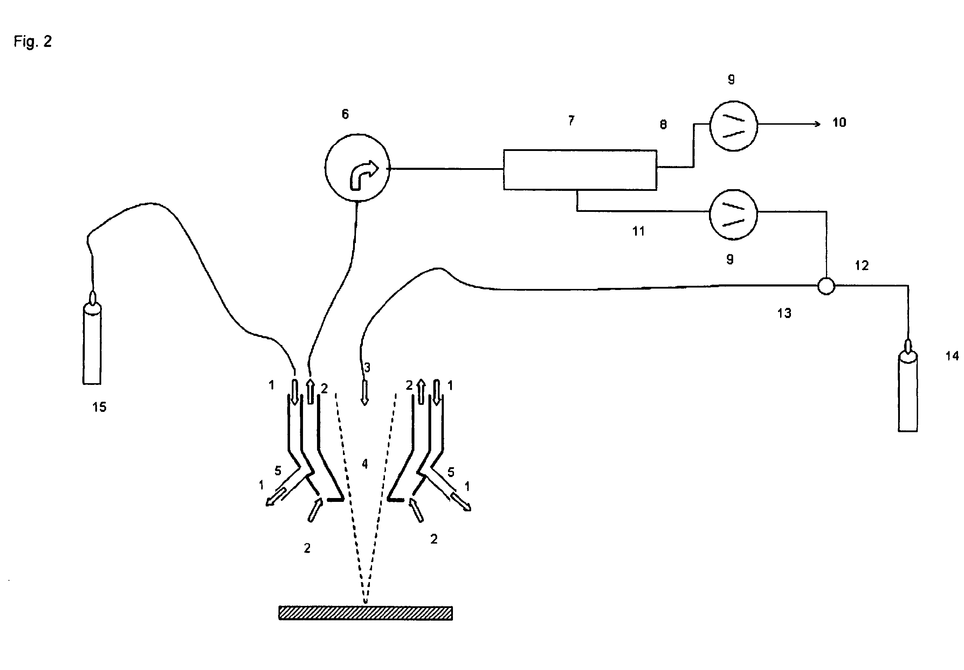

Fig. 2 shows another embodiment of the invention. Most features correspond to the features of Fig. 1 and have the same reference numbers. Different is the Aaberg nozzle where the exit for the Aaberg gas flow 1 is integrated into the tip of the baffle 5. This improves the flow and the separational effect of the real baffle 5 and the virtual baffle of the Aaberg gas flow 1.

## Claims

1. A method for laser welding using a welding torch with
- a central first flow (3) of a process or shielding gas containing Helium
- a second flow (1) of a shroud gas (Aaberg flow) and
- a third flow (2) for fume gas extraction,
**characterized by** an annular baffle (5) in between the fume gas flow (2) and the shroud gas flow (1) for separating the inner fume gas extraction flow (2) from the outer Aaberg flow (1), wherein the baffle (5) has a conical shape with an aperture angle against the axis of the torch between 30 ° and 60° and the baffle (5) has a length of 0,5 - 4 diameters of the nozzle exit.

2. A method for laser welding according to claim 1, **characterized by** a baffle (5) with Aaberg gas flow (1) outlet in the tip of the baffle.

3. A method of laser welding according to one of the proceeding claims, **characterized by** welding gas recycling for feeding back at least part of the purified helium via an adjustable valve (12) directly into the flow line (13) to welding torch.

4. A torch for laser welding with
- a central first outlet port for a process or shielding gas containing Helium
- a second port for a shroud gas (Aaberg gas) and
- a third port for fume gas extraction,
**characterized by** an annular baffle (5) in between the second and the third port for separating the inner fume gas extraction flow (2) from the outer Aaberg flow (1), wherein the baffle (5) has a conical shape with an aperture angle against the axis of the torch between 30 ° and 60° and the baffle (5) has a length of 0,5 - 4 diameters of the nozzle exit.

5. A torch according to claim 4, wherein the baffle (5) has an aperture angle against the axis of the torch between 40° and 50°, especially preferred 45°.

6. A torch according to claims 4 or 5, whereby the baffle (5) has a length of 1 to 2 diameters of the nozzle exit.

7. A torch according to claims 4, 5 or 6, **characterized by** a baffle (5) with an Aaberg gas flow outlet in the tip of the baffle (5).

## Patentansprüche

1. Verfahren zum Laserschweißen unter Verwendung eines Schweißbrenners mit
- einem zentralen ersten Strom (3) eines Prozess- oder Schutzgases, das Helium enthält,
- einem zweiten Strom (1) eines Hüllgases (Aaberg-Strom) und
- einem dritten Strom (2) zum Rauchgasabzug,
**gekennzeichnet durch** ein ringförmiges Leitblech (5) zwischen dem Rauchgasstrom (2) und dem Hüllgasstrom (1), um den inneren Rauchgas-Abzugsstrom (2) vom äußeren Aaberg-Strom (1) zu trennen, wobei das Leitblech (5) eine konische Form mit einem Öffnungswinkel gegen die Achse des Brenners von zwischen 30° und 60° aufweist und das Leitblech (5) eine Länge von 0,5 bis 4 Durchmessern des Düsenausgangs aufweist.

2. Verfahren zum Laserschweißen nach Anspruch 1, **gekennzeichnet durch** ein Leitblech (5) mit Auslass für den Aaberg-Gasstrom (1) in der Spitze des Leitbleches.

3. Verfahren zum Laserschweißen nach einem der vorhergehenden Ansprüche, **gekennzeichnet durch** Schweißgas-Wiederverwertung zum Rückführen mindestens eines Teils des gereinigten Heliums über ein einstellbares Ventil (12) direkt in die Strömungsleitung (13) zum Schweißbrenner.

4. Brenner zum Laserschweißen mit
- einem zentralen ersten Auslassanschluss für ein Prozess- oder Schutzgas, das Helium enthält,
- einem zweiten Anschluss für ein Hüllgas (Aaberg-Gas) und
- einem dritten Anschluss für den Rauchgasabzug,
**gekennzeichnet durch** ein ringförmiges Leitblech (5) zwischen dem zweiten und dem dritten Anschluss, um den inneren Rauchgas-Abzugsstrom (2) vom äußeren Aaberg-Strom (1) zu trennen, wobei das Leitblech (5) eine konische Form mit einem Öffnungswinkel gegen die Achse des Brenners von zwischen 30° und 60° aufweist und das Leitblech (5) eine Länge von 0,5 bis 4 Durchmessern des Düsenausgangs aufweist.

5. Brenner nach Anspruch 4, wobei das Leitblech (5) einen Öffnungswinkel gegen die Achse des Brenners von zwischen 40° und 50° aufweist, besonders bevorzugt von 45°.

6. Brenner nach Anspruch 4 oder 5, wobei das Leitblech (5) eine Länge von 1 bis 2 Durchmessern des Düsenausgangs aufweist.

7. Brenner nach Anspruch 4, 5 oder 6, **gekennzeichnet durch** ein Leitblech (5) mit einem Aaberg-Gasstromauslass in der Spitze des Leitbleches (5).

## Revendications

1. Procédé de soudage laser utilisant une torche de soudage comportant
- un premier écoulement central (3) d'un gaz de processus ou d'écran contenant de l'hélium
- un deuxième écoulement (1) d'un gaz d'enveloppement (écoulement d'Aaberg) et
- un troisième écoulement (2) servant à l'extraction des gaz de fumées,
**caractérisé par** un déflecteur annulaire (5) intercalé entre l'écoulement (2) de gaz de fumées et l'écoulement (1) de gaz d'enveloppement pour séparer l'écoulement intérieur (2) d'extraction des gaz de fumées de l'écoulement extérieur (1) d'Aaberg, le déflecteur (5) présentant une forme conique avec un angle d'ouverture par rapport à l'axe de la torche compris entre 30° et 60° et le déflecteur (5) présentant une longueur de 0,5 à 4 diamètres de sortie de la buse.

2. Procédé de soudage laser selon la revendication 1, **caractérisé par** un déflecteur (5) doté d'une sortie d'écoulement (1) de gaz d'Aaberg dans l'extrémité du déflecteur.

3. Procédé de soudage laser selon l'une des revendications précédentes, **caractérisé par** un recyclage du gaz de soudure servant à réintroduire au moins une partie de l'hélium purifié via une vanne réglable (12) directement dans la canalisation (13) d'écoulement vers la torche de soudage.

4. Torche pour soudage laser comportant
- un premier orifice central de sortie destiné à un gaz de processus ou d'écran contenant de l'hélium
- un deuxième orifice destiné à un gaz d'enveloppement (gaz d'Aaberg) et
- un troisième orifice servant à l'extraction des gaz de fumées,
**caractérisé par** un déflecteur annulaire (5) intercalé entre le deuxième et le troisième orifice pour séparer l'écoulement intérieur (2) d'extraction des gaz de fumées de l'écoulement extérieur (1) d'Aaberg, le déflecteur (5) présentant une forme conique avec un angle d'ouverture par rapport à l'axe de la torche compris entre 30° et 60° et le déflecteur (5) présentant une longueur de 0,5 à 4 diamètres de sortie de la buse.

5. Torche selon la revendication 4, le déflecteur (5) présentant un angle d'ouverture par rapport à l'axe de la torche compris entre 40° et 50°, idéalement 45°.

6. Torche selon les revendications 4 ou 5, le déflecteur (5) présentant une longueur de 1 à 2 diamètres de sortie de la buse.

7. Torche selon les revendications 4, 5 ou 6, **caractérisé par** un déflecteur (5) doté d'une sortie d'écoulement de gaz d'Aaberg dans l'extrémité du déflecteur (5).
